# EUROPÄISCHE PATENTSCHRIFT

(11) **EP 0 940 446 B1**
(45) Veröffentlichungstag und Bekanntmachung des Hinweises auf die Patenterteilung: **07.03.2001**
(21) Anmeldenummer: 99100355.9
(22) Anmeldetag: 14.01.1999
(51) Int. Cl.: C08L 83/04, C08K 5/36, C08K 5/37, C08K 5/54

(54) **RTV-2 Siliconschäume mit niedrigem Druckverformungsrest**
RTV-2 silicone foams having low compression set
Mousses de silicone RTV-2 à faible déformation permanente

(30) Priorität: 26.02.1998 DE 19808117
(43) Veröffentlichungstag der Anmeldung: 08.09.1999
(73) Patentinhaber: WACKER-CHEMIE GMBH, D-81737 München (DE)
(72) Erfinder: Söllradl, Herbert, Dr., 84547 Emmerting (DE); Neuhauser, Franz, 5132 Geretsberg (AT); Matejcek, Klaus-Michael, Dr., 84489 Burghausen (DE); Stadelmann, Berndt, Dr., 84489 Burghausen (DE)
(74) Vertreter: Fritz, Helmut, Dr.

(56) Entgegenhaltungen:
- EP-A- 0 388 201
- EP-A- 0 582 299
- EP-A- 0 834 534

## Beschreibung

Die Erfindung betrifft Siliconschäume, ein Verfahren zu ihrer Herstellung und Formkörper aus diesen Massen und deren Herstellung.

Zu Elastomeren vernetzende Massen, die einen niedrigen Druckverformungsrest haben sollen, sind bereits beschrieben.

Aus der DE 41 00 217 (Degussa AG) ist bekannt, daß Thiocyanatopropyltrialkoxysilane eine Verbesserung des Druckverformungsrestes von peroxidisch unter Wärmeeinwirkung vulkanisierbare Formmassen bewirken können. Hierbei wird beschrieben, daß die Organosiliciumverbindungen getrennt oder umgesetzt mit einem Füllstoff verwendet werden können. Ebenfalls bekannt aus DE 33 19 251 (Degussa AG) ist für vulkanisierbare Halogenkautschukmischungen der Einsatz von Isothiuroniumverbindungen anstelle von Thioharnstoffderivaten. Für die erhaltenen Vulkanisate werden gegenüber vergleichbaren Halogenkautschukverbindungen ohne Isothiuroniumverbindungen verbesserte Werte in Bezug auf Festigkeit, Spannungswert, Abrieb und Druckverformungsrest festgestellt.

In EP 0 278 157 (Shin Etsu Chemical Co., Ltd.) sind mit organischen Schwefelverbindungen oder mit organischen Peroxiden vulkanisierbaren Kautschuken thiocarbamylfunktionelle Organosilane zur Verbesserung des Druckverformungsrestes zugesetzt.

Andere Vorschläge zur Verbesserung des Druckverformungsrestes basieren auf der Verwendung von Zusätzen wie z.B. Bariumperoxid, Bariumoxid oder Magnesiumoxid (US-PS 3 261 801, US-PS 3 468 838 und US-PS 3 865 778) und der Anwendung von Polycarbodiimid-Polysiloxan-Mischpolymeren (EP 0 010 708), die zu stark gefärbten Produkten führen.

Die vorgenannten Verfahren zur Verbesserung des Druckverformungsrestes beziehen sich auf Kautschuke, die mittels organischer Schwefelverbindungen oder mittels organischer Peroxide zu Elastomeren vernetzbar sind.

Organopolysiloxanmassen, die durch eine Additionsreaktion, bevorzugt durch eine Hydrosilylierungsreaktion von vinylhaltigen Siloxanen, zur Vernetzung gebracht werden, werden dagegen durch eine Reihe von Platinverbindungen katalysiert. Zur Verbesserung des Druckverformungsrestes sind für additionsvernetzende Systeme bisher Eisen-Mangan-Spinelle der empirischen Formel Fe_{y}Mn_{z}O₄ beschrieben (Wacker Silicones: EP 582 299), Triazol-Verbindungen (Shin Etsu Chemical Co., Ltd.: US 510 49 19), vinyl-spezifische organische Peroxide > 0.2 Gew.% (Dow Corning Co.: EP 0 377 185) und Übergangsmetallchalkogenide (Bayer AG: EP 0 455 078).

Die vorgenannten Massen haben den Nachteil, daß sie keine additionsvernetzenden Massen zur Verfügung stellen, die einen geringen Druckverformungsrest haben.

In EP 0 691 365 (Ernst Sonderhoff GmbH & Co) wird die Verbesserung des Druckverformungsrestes von Schäumen durch Erhöhung des Pt-Gehaltes und 15-20 Minuten Tempern bei 120-150°C erreicht.
Dieses Verfahren hat den Nachteil, daß es eine zusätzliche Temperaturbehandlung sowie erhöhten Pt-Katalysatoranteil erfordert.

Aufgabe der Erfindung ist es, die Nachteile des Stands der Technik zu überwinden und insbesonere Siliconschaumelastomere zur Verfügung zu stellen, die einen geringen Druckverformungsrest aufweisen ohne Temperaturbehandlung bei gleichzeitiger hoher Reproduzierbarkeit derselben nach Lagerung.

Gegenstand der Erfindung zu Elastomeren vernetzende Massen auf der Basis von
Komponente (A), enthaltend Polyorganosiloxan (I) mit mindestens zwei Alkenylgruppen pro Molekül, zumindest eine Hydroxylgruppe enthaltende Verbindung und einen metallischen Katalysator (V), mit der Maßgabe, daß die Hydroxylgruppen enthaltende Verbindung nicht Ethinylcyclohexanol ist und
Komponente (B), enthaltend Polyorganosiloxan (II) mit mindestens zwei siliciumgebundenen Wasserstoffatomen und organische Schwefelverbindung (VI).

Komponente (A) enthält Polyorganosiloxan (I) und zumindest eine Hydroxylgruppe enthaltende Verbindung, die vorzugsweise Polyorganosiloxan (III) oder einen einwertigen oder mehrwertigen Alkohol, Wasser, Silanol oder andere Hydroxylgruppen enthaltende Verbindungen (IV) oder beliebige Mischungen aus (III) und Verbindungen (IV) sein kann. Polyorganosiloxan (I) der erfindungsgemäßen Siliconschaummassen ist ein mindestens zwei Alkenylgruppen pro Molekül enthaltendes Polyorganosiloxan mit einer Viskosität bei 25°C im Bereich von vorzugsweise 0,5 bis 500 Pa·s, bevorzugt von 1 bis 100 Pa·s und besonders bevorzugt 2 bis 50 Pa·s. Polyorganosiloxan (I) wird in Mengen, wobei sich alle Mengenangaben, die in Gew.% angegeben sind, sich auf die Gesamtmassen beziehen, die vorzugsweise zwischen 1-98 Gew.% und bevorzugt zwischen 10-95 Gew.% und besonders bevorzugt zwischen 20-90 Gew.% liegen, eingesetzt.

Polyorganosiloxan (III) der erfindungsgemäßen Siliconschaummassen ist vorzugsweise ein mindestens zwei Hydroxylgruppen pro Molekül enthaltendes Polyorganosiloxan mit einer Viskosität bei 25°C im Bereich von vorzugsweise 1 bis 100000 mPa·s, bevorzugt von 10 bis 10000 mPa·s und besonders bevorzugt 50 bis 250 mPa·s. Polyorganosiloxan (III) wird in Mengen, die vorzugsweise zwischen 1-95 Gew.% und bevorzugt zwischen 1-50 Gew.% und besonders bevorzugt zwischen 2-20 Gew.% liegen, eingesetzt.

Komponente (A) kann auch noch weitere Zusätze, wie unten aufgeführt, enthalten.

Komponente (B) enthält die Polyorganosiloxane (II) und organische Schwefelverbindung (VI) und vorzugsweise noch zusätzlich Polyorganosiloxane (I) und (III) und kann auch noch weitere Zusätze, wie unten aufgeführt, enthalten.

Polyorganosiloxan (II) der erfindungsgemäßen Siliconschäume ist ein mindestens zwei Si-H Gruppen pro Molekül enthaltendes Polyorganosiloxan mit einer Viskosität bei 25°C im Bereich von vorzugsweise 10 bis 10000 mPa·s, besonders bevorzugt von 10 bis 50 mPa^{.}s.

Polyorganosiloxan II wird in Mengen von 1 bis 50 Gew.%, bevorzugt in Mengen von 2 bis 30 Gew.% und besonders bevorzugt von 2 bis 15 Gew.% eingesetzt.

Das Polyorganosiloxan (I) ist aufgebaut aus Einheiten der Formel

RₐR¹ _{b}SiO_{(4-a-b)/2},

wobei a 0, 1 oder 2 ist, b 0, 1, 2 oder 3 ist, mit der Maßgabe, daß mindestens zwei Reste R in jedem Molekül vorhanden sind und die Summe (a+b) < 4 ist.

R stellt vorzugsweise eine Alkenylgruppe dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethenyl, Butadienyl, Hexadienyl, Cyclopentenyl, Cyclopentadienyl, Cyclohexenyl, vorzugsweise Vinyl und Allyl, verwendet.

R¹ stellt vorzugsweise einen substituierten oder nichtsubstituierten, aliphatisch gesättigten oder aromatischen, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen, gebunden sein.

Polyorganosiloxan (I) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear oder auch verzweigt sein. Verzweigte Polyorganosiloxane enthalten neben monofunktionellen Einheiten, wie RR¹₂SiO_{1/2} und R¹₃SiO_{1/2}, und difunktionellen Einheiten, wie R¹₂SiO_{2/2} und RR¹SiO_{2/2}, auch trifunktionelle Einheiten, wie R¹SiO_{3/2} und RSiO_{3/2}, und/oder tetrafunktionelle Einheiten der Formel SiO_{4/2}, wobei R und R¹ die oben dafür angegebene Bedeutung haben. Der Gehalt an diesen zu verzweigten Polyorganosiloxanen führenden tri- und/oder tetrafunktionellen Einheiten sollte 20 Mol-% nicht wesentlich überschreiten. Das Alkenylgruppen enthaltende Polyorganosiloxan kann auch Einheiten der allgemeinen Formel -OSi(R²R³)R⁴Si(R²R³)O- enthalten, wobei sowohl R² als auch R³ die vorstehend für R und R¹ angegebene Bedeutung haben und R⁴ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Polyorganosiloxan (I) enthalten sein.

Besonders bevorzugt ist die Verwendung Vinylgruppen enthaltender Polydimethylsiloxane, deren Moleküle der Formel

(ViMe₂SiO_{1/2})₂(ViMeSiO)ₐ(Me₂SiO)_{b}

entsprechen, wobei a null oder eine nichtnegative Zahl und b eine nichtnegative Zahl ist und folgende Relationen erfüllt werden: 50<(a+b)<2200, vorzugsweise 200<(a+b)<1000.

Als Vernetzer wird Polyorganosiloxan (II) bei der Additionsvernetzung der erfindungsgemäßen Siliconkautschukmasse eingesetzt, das vorzugsweise ein SiH-funktionelles Polyorganosiloxan ist, das aufgebaut ist aus Einheiten der nachfolgenden Formel

H_{c}R¹ _{d}SiO_{(4-c-d)/2},

wobei c 0, 1 oder 2 ist, d 0, 1, 2 oder 3 ist, mit der Maßgabe, daß die Summe (c+d) < 4 ist und daß mindestens zwei siliciumgebundene Wasserstoffatome pro Molekül vorhanden sind und R¹ die oben dafür angegebene Bedeutung hat.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Polyorganosiloxans (II) enthält das Alkenylgruppen enthaltende Polyorganosiloxan (I) vorzugsweise mindestens drei Alkenylgruppen pro Molekül.

Das Polyorganosiloxan (II) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.% Wasserstoff.

Das Polyorganosiloxan (II) enthält vorzugsweise mindestens drei und vorzugsweise höchstens 600 Siliciumatome pro Molekül. Besonders bevorzugt ist die Verwendung von SiH-Vernetzern, die zwischen 4 und 200 Siliciumatome pro Molekül enthalten.

Die Struktur des Polyorganosiloxans (II) kann linear, verzweigt, cyclisch oder netzwerkartig sein. Lineare und cyclische Polyorganosiloxane (II) sind aus Einheiten der Formel HR¹ ₂SiO_{1/2}, R¹ ₃SiO_{1/2}, HR¹SiO_{2/2} und R¹ ₂SiO_{2/2} zusammengesetzt, wobei R¹ die vorstehend dafür angegebene Bedeutung hat. Verzweigte und netzwerkartige Polyorganosiloxane (II) enthalten zusätzlich trifunktionelle Einheiten, wie HSiO_{3/2} und R¹SiO_{3/2}, und/ oder tetrafunktionelle Einheiten der Formel SiO_{4/2}. Mit zunehmendem Gehalt an tri- und/oder tetrafunktionellen Einheiten weisen diese Vernetzungsmittel eine netzwerkartige, harzartige Struktur auf. Die im Polyorganosiloxan (II) enthaltenen organischen Reste R¹ werden üblicherweise so gewählt, daß diese mit den im Polyorganosiloxan (I) befindlichen organischen Resten verträglich sind, so daß die Bestandteile (I),(II) und (III) mischbar sind.

Als Vernetzer können auch Kombinationen und Mischungen der hier beschriebenen Polyorganosiloxane (II) verwendet werden.

Besonders bevorzugte Polyorganosiloxane (II) haben die Formel

(HR¹ ₂SiO_{1/2})ₑ(R¹ ₃SiO_{1/2})_{f}(HR¹SiO_{2/2})_{g}(R¹ ₂SiO_{2/2})ₕ,

wobei die nichtnegativen ganzen Zahlen e, f, g und h folgende Relationen erfüllen: (e+f)=2, (e+g)>2, 5<(g+h)<200 und R¹ die oben dafür angegebene Bedeutung hat und die mit e, f, g und h indizierten Einheiten in beliebiger Reihenfolge auftreten können.

Das Polyorganosiloxan (II) ist vorzugsweise in einer solchen Menge in der härtbaren Siliconschaum enthalten, daß das Molverhältnis von SiH-Gruppen zu Alkenylgruppen vorzugsweise zwischen 0,5 und 5, bevorzugt zwischen 1,0 und 3,0, liegt.

Das Polyorganosiloxan (III) ist aufgebaut aus Einheiten der Formel

(HO)ᵢR¹⁴ ⱼSiO_{(4-i-j)/2},

wobei i 0, 1 oder 2 ist, j 0, 1, 2 oder 3 ist, mit der Maßgabe, daß mindestens zwei Reste R in jedem Molekül vorhanden sind und die Summe (i+j) < 4 ist. Die Hydroxylgruppen von Polyorganosiloxan (III) reagieren mit überschüssigen Si-H-gruppen des Vernetzers unter Bildung einer Si-O-Si-Bindung sowie Abspaltung von Wasserstoff, der für die Schaumbildung notwendig ist.

R¹⁴ stellt vorzugsweise einen substituierten oder nichtsubstituierten, aliphatisch gesättigten oder aromatischen, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

HO stellt eine Hydroxylgruppe dar.

Die Hydroxylgruppen können in jeder Position der Polymerkette, insbesondere an den endständigen Siliciumatomen, gebunden sein.

Polyorganosiloxan (III) kann auch eine Mischung verschiedener Hydroxylgruppen enthaltender Polyorganosiloxane sein, die sich beispielsweise im Hydroxylgruppengehalt und/oder strukturell unterscheiden.
Die Struktur der Hydroxylgruppen enthaltenden Polyorganosiloxane kann linear oder auch verzweigt sein. Verzweigte Polyorganosiloxane enthalten neben monofunktionellen Einheiten, wie HOR¹⁴₂SiO_{1/2} und R¹⁴₃SiO_{1/2}, und difunktionellen Einheiten, wie R¹⁴₂SiO_{2/2} und HOR¹⁴SiO_{2/2}, auch trifunktionelle Einheiten, wie R¹⁴SiO_{3/2} und HOSiO_{3/2}, und/oder tetrafunktionelle Einheiten der Formel SiO_{4/2}, wobei R¹⁴ die oben dafür angegebene Bedeutung hat. Der Gehalt an diesen zu verzweigten Polyorganosiloxanen führenden tri- und/oder tetrafunktionellen Einheiten sollte 20 Mol-% nicht wesentlich überschreiten. Das Hydroxylgruppen enthaltende Polyorganosiloxan kann auch Einheiten der allgemeinen Formel -OSi(R¹⁵R¹⁶)R¹⁷Si(R¹⁵R¹⁶)O- enthalten, wobei sowohl R¹⁵ als auch R¹⁶ die vorstehend für R¹⁴ angegebene Bedeutung haben und R¹⁷ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Polyorganosiloxan (III) enthalten sein.

Besonders bevorzugt ist die Verwendung Hydroxylgruppen enthaltender Polydimethylsiloxane, deren Moleküle der Formel

(HOMe₂SiO_{1/2})₂(HOMeSiO)ᵢ(Me₂SiO)ⱼ

entsprechen, wobei Me Methyl bedeutet, i null oder eine nichtnegative Zahl und j die oben angegebene Bedeutung hat und folgende Relationen erfüllt werden: 20<(i+j)<2200, vorzugsweise 40<(i+j)<750, wobei die mit i und j indizierten Einheiten in beliebiger Reihenfolge auftreten können.

Die zumindest eine Hydroxylgruppe enthaltende Verbindung kann ein Verbindung (IV) sein, die das Schäumungsverhalten durch Reaktion mit H-Si-Funktionalitäten von Verbindung (II) unter Abspaltung von Wasserstoff ohne zur Vernetzung beizutragen, beeinflußt. Dazu zählen Alkohole R¹⁸-OH, Wasser, Silanole und andere OH-Gruppen enthaltende Verbindungen.

Die Verbindung (IV) ist vorzugweise zwischen 0,005 Gew% und 0,1 Gew%, bevorzugt zwischen 0,005Gew% und 0,05 Gew% und besonders bevorzugt zwischen 0,005 Gew% und 0,003 Gew% bezogen auf das Gesamtgewicht der Massen enthalten.

Die zumindest eine Hydroxylgruppe enthaltende Verbindung ist vorzugsweise ein einwertiger oder mehrwertiger Alkohohl (IV), der aus Einheiten der Formel

R¹⁸(OH)ₘ

aufgebaut ist.

Bei m=1 (Monoalkohol) stellt R¹⁸ einen substituierten oder nichtsubstituierten, aliphatisch gesättigten oder aromatischen, monovalenten Kohlenwasserstoffrest mit 1 bis 10 Kohlenstoffatomen, vorzugsweise 1 bis 6 Kohlenstoffatomen, oder Wasserstoff (bei Wasser) dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.
Ist m>1 so handelt es sich um einen mehrwertigen Alkohol der Strukturen:

[CH₂]ₓ[CHOH]ₒ[CH₂OH]₂

Beispiele hierfür sind vorzugsweise Glycol (x=0, o=0) und Glycerin (x=0, o=1).

Die zumindest eine Hydroxylgruppe enthaltende Verbindung kann auch vorzugsweise eine beliebige Mischung aus einem Polyorganosiloxan (III) mit mindestens zwei Hydroxylgruppen pro Molekül und einem einwertigen oder mehrwertigen Alkohol, Wasser, Silanol oder anderen Hydroxylgruppen enthaltende Verbindungen (IV) sein. Die Verbindungen (III) und die Verbindungen (IV) können im beliebigen Verhältnis im Rahmen der für sie angegeben Mengen gemischt werden.

Der metallische Katalysator (V), der vorzugsweise in Komponente (A) enthalten ist, dient für die Additionsreaktion (Hydrosilylierung) zwischen den Alkenylgruppen des Polyorganosiloxans (I) und den siliciumgebundenen Wasserstoffatomen des Polyorganosiloxans (II). In der Literatur wurden zahlreiche geeignete Hydrosilylierungskatalysatoren (V) beschrieben. Prinzipiell können alle üblicherweise in additionsvernetzenden Siliconkautschukmassen eingesetzten Hydrosilylierungskatalysatoren verwendet werden.

Außerdem dient der Katalysator für die Reaktion von den Hydroxylgruppen des Polyorganosiloxans (III) bzw. der Hydroxylgruppen enthaltenden Verbindungen (IV) und den siliciumgebundenen Wasserstoffatomen des Polyorganosiloxans (II).

Als Hydrosilylierungskatalysator (V) können Metalle, wie Platin, Rhodium, Palladium, Ruthenium und Iridium, vorzugsweise Platin, die gegebenenfalls auf feinteiligen Trägermaterialien fixiert sind, eingesetzt werden.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂·C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Fein verteiltes Platin auf Trägermateralien wie Siliciumdioxid, Aluminiumoxid oder aktivierter Holz- bzw. Tierkohle, Platinhalogenide wie PtCl₄, Hexachloroplatinsäure und Na₂PtCl₄·nH₂O, Platin-Olefin Komplexe, z.B. solche mit Ethylen, Propylen oder Butadien, Platin-Alkohol Komplexe, Platin-Styrol Komplexe wie in U.S. 4 394 317 beschrieben, Platin-Alkoholat Komplexe, Platin-Acetylacetonate, Reaktionsprodukte aus Chloroplatinsäure und Monoketonen, z.B. Cyclohexanon, Methylethylketon, Aceton, Methyl-n-propylketon, Diisobutylketon, Acetophenon und Mesityloxid, als auch Platin-Vinylsiloxan Komplexe - die Platin-Vinylsiloxan Komplexe wurden z.B. in U.S. 3 715 334, 3 775 452 und 3 814 730 beschrieben, wie Platin-divinyl-tetramethyldisiloxan Komplexe mit oder ohne nachweisbaren Mengen an anorganischem Halogen, in einer Menge, die ausreicht, um das Härten der Zusammensetzung bei einer Temperatur von Umgebungstemperatur bis 250°C zu fördern, wobei das Organohydrogensiloxan und der Hydrosilylierungskatalysator in verschiedenen Teilen der mehrteiligen härtbaren Zusammensetzung angeordnet sind, ist bevorzugt. Besonders bevorzugt sind Komplexe des Platins mit Vinylsiloxanen, wie sym-Divinyltetramethyldisiloxan.

Der Hydrosilylierungskatalysator (V) kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt von Platin-Metall in der härtbaren Siliconschaum im Bereich von 0,1 bis 500 Gew.-ppm (ppm = Teile pro 1 Million Teile), vorzugsweise zwischen 10 und 100 Gew.-ppm Platin-Metall. Ansonsten wird der Katalysator gegebenenfalls zusammen mit einem Inhibitor vorzugsweise in Mengen von 0,01 bis 5 Gew.% eingesetzt.

Bei der erfindungsgemäßen Schwefelverbindung (VI) handelt es sich um eine organische Schwefelverbindung, z.B. aus der Gruppe der Thiole (Mercaptane, wie z.B. Alkylthiole, Arylthiole, Mercaptoheterocyclen wie Mercaptoimidazole, Mercaptobenzimidazole), Keten-S,X-acetale, mit X bevorzugt gleich N oder S, Thioacetale, Sulfane (Thioether), Disulfane (Dithioether), Polysulfane, Thioamide, Thioharnstoffe, Thiurame (Thiurammono-, di- oder polysulfide, Bisthiocarbamoylmono-, di- oder polysulfane), Thiuroniumsalze, Thiocarbamate, Dithiocarbamate und deren Zn-, Fe-, Ni-, Co- oder Cu-Salze, Thiocyanate, Isothiocyanate, Thiocarbonylverbindungen (wie z.B. Thioaldehyde, Thioketone, Thiolactone, Thiocarbonsäuren), Thia-Heterocyclen (wie z.B. Thiophen, 1,2- oder 1,3-Dithiole bzw. 1,2- oder 1,3-Dithiol-thione, Thiazole, Mercaptothiazole, Mercaptothiadiazole, Benzo-dithiole bzw. Benzo-dithiol-thione, Benzthiazole, Mercaptobenzthiazole, Phenothiazine, Thianthrene), die Gegenwart eines Silans mit schwefelhaltigen funktionellen Gruppen, z.B. eines Mercaptoalkyl-alkyl-alkoxysilans der allgemeinen Formel (5),

(5) (R⁴O)₃₋ₙR⁵ ₙSi-R⁶-SH

eines Bis-(trialkoxysilyl-alkyl)mono-, di- oder polysulfans der allgemeinen Formel (6), eines Thiocyanatoalkyltrialkoxysilans der allgemeinen Formel (7), die Gegenwart eines Füllstoffes,

(6) [(R⁷O)₃Si-R⁸-]₂-Sₙ (7) (R⁹O)₃Si-R¹⁰-SCN

bevorzugt Kieselsäuren, auf den diese Silane mit schwefelhaltigen funktionellen Gruppen aufgebracht, umgesetzt oder abgemischt wurden, z.B. hochdisperses Siliciumdioxid, und bzw. oder die Gegenwart eines thiofunktionellen Siloxans, z.B. eines Polydimethylsiloxan-co-mercaptoalkyl-, bevorzugt -ethyl-und -propyl-, siloxans in mindestens einem Teil der mehrteiligen Zusammensetzung, bevorzugt dem H-Siloxan haltigen Teil.

R⁴ stellt vorzugsweise einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl.

R⁵ stellt vorzugsweise einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Aryl- und Alkarylgruppen, wie Phenyl, Tolyl, Xylyl, Mesityl, Benzyl.

R⁶ stellt vorzugsweise einen substituierten oder nichtsubstituierten, aliphatisch gesättigten, bivalenten Kohlenwasserstoffrest mit 1 bis 10 Kohlenstoffatomen, vorzugsweise 1 bis 6 Kohlenstoffatomen, dar. Beispiele hierfür sind die Alkylengruppen, wie vorzugsweise Methylen, Ethylen, Propylen, Butylen, Hexylen, Phenylen, besonders bevorzugt Propylen.
R⁷ und R⁹ haben die Bedeutung von R⁴.
R⁸, R¹⁰ haben die Bedeutung von R⁶.
n hat die Bedeutung von n = 1-10, bevorzugt n = 2 oder 4.

Es können auch Gemische dieser organischen Schwefelverbindungen eingesetzt werden.

Die organische Schwefelverbindung oder ihre Gemische werden in Mengen von 0,0001% - 2%, bevorzugt 0,001% - 0,2%, besonders bevorzugt 0,005 - 0,15 % bezogen auf das Gesamtgewicht der Zusammensetzung, eingesetzt.

In einer der Komponenten A oder B können auch die folgenden Zusätze enthalten sein.

Während die Bestandteile (I), (II), zumindest eine Hydroxylgruppe enthaltende Verbindung, (V) und (VI) notwendige Bestandteile der erfindungsgemäßen Siliconkautschukmasse sind, können wahlweise weitere Zusätze zu einem Anteil von bis zu 60 Gew.-%, vorzugsweise zwischen 1 und 20 Gew.-%, in der Siliconkautschukmasse enthalten sein. Diese Zusätze können z.B. Füllstoffe, Haftvermittler, Inhibitoren, Metallstäube, Fasern, Pigmente, Farbstoffe, Weichmacher usw. sein.

Beispiele für Füllstoffe sind verstärkende Füllstoffe, eines verstärkenden anorganischen, bevorzugt silikatischen, Füllstoffs wie z.B. hochdisperses Siliciumdioxid (Kieselsäure) mit spezifischen Oberflächen von 50 - 500 m²/g, bevorzugt 110-300 m²/g, die auch oberflächenmodifiziert sein können. Diese können hergestellt werden z.B. durch Ausfällung aus Lösungen von Silikaten mit anorganischen Säuren und durch hydrothermalen Aufschluß, durch hydrolytische und bzw. oder oxidative Hochtemperaturumsetzung von flüchtigen Siliciumhalogeniden oder durch ein Lichtbogenverfahren. Diese Kieselsäuren können gegebenenfalls auch als Mischoxide oder Oxidgemische mit den Oxiden der Metalle Aluminium, Magnesium, Calcium, Barium, Zink, Zirkon und/oder Titan vorliegen. Des weiteren können nicht verstärkende Füllstoffe, also Füllstoffe mit einer spezifischen Oberfläche nach BET von weniger als 50 m²/g, wie Quarzmehl, Diatomeenerde, Calciumsilikat, Zirkoniumsilikat, Zeolithe, Metalloxide, wie Eisenoxid, Zinkoxid, Titandioxid, Aluminiumoxid, Metallcarbonate, wie Calciumcarbonat, Magnesiumcarbonat, Zinkcarbonat, Metallsulfate, Glimmer, Siloxanharze, Tone, Lithophone Graphit und Kreide verwendet werden. Die genannten Füllstoffe können hydrophobiert sein. Synthetische Silikate, natürliche Silikate, Glasfasern und Glasfasererzeugnisse wie Matten, Stränge, Gewebe, Gelege und dergleichen sowie Mikroglaskugeln können verwendet werden. Vorzugsweise werden 10 bis 60%, bezogen auf das Gewicht der Zusammensetzung an Füllstoff zugegeben.

Ruß kann zusätzlich in den erfindungsgemäßen Kautschukmassen zugegen sein, nicht nur zur Grau- oder Schwarzfärbung der Vulkanisate, sondern auch zur Erzielung von besonderen, wertvollen Vulkanisationseigenschaften, wobei die bekannten Gummiruße vorgezogen werden. Der Ruß wird in Mengen von 0 bis 35 Gewichtsteilen, bezogen auf 100 Gewichtsteile Kautschuk, in mindestens einem Teil der mehrteiligen Zusammensetzung eingesetzt. Eine untere Grenze mit der Zahl Null bedeutet im Rahmen der vorliegenden Erfindung, daß der Mischungsbestandteil in der Kautschukmischung vorhanden sein kann, aber nicht muß.

Wenn Ruß in einer Mischung zugegen ist, ist die untere Grenze praktisch bei 0,1 Gewichtsteilen anzusetzen.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPa·s bei 25°C.

Insbesondere können harzartige Polyorganosiloxane, die im wesentlichen aus Einheiten der Formeln R¹¹₃SiO_{1/2}, R¹¹SiO_{3/2} und/oder SiO_{4/2}, ggf. auch R¹²₂SiO_{2/2}, bestehen, bis zu einem Anteil von 50 Gew.-%, vorzugsweise bis zu 20 Gew.-%, bezogen auf das Gesamtgewicht des Siliconkautschuks, enthalten sein. Das Molverhältnis zwischen monofunktionellen und tri- oder tetrafunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von R¹²R¹¹₂SiO_{1/2}- und/oder R¹²R¹¹SiO_{2/2}-Einheiten, enthalten sein.

R¹² stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie Methyl, Ethyl, Propyl, Butyl und Hexyl; Cycloalkylgruppen, wie Cyclopentyl, Cyclohexyl und Cycloheptyl; Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

R¹³ stellt vorzugsweise eine Alkenylgruppe dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethenyl, Butadienyl, Hexadienyl, Cyclopentenyl, Cyclopentadienyl, Cyclohexenyl, vorzugsweise Vinyl und Allyl, verwendet.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphane, Phosphite, Nitrile, Diaziridine und Oxime. Vorzugsweise können Siloxane, besonders bevorzugt 1,3-Divinyl-1,1,3,3- tetramethyl-disiloxan und Tetramethyl-tetravinylcyclotetrasiloxan verwendet werden.

Die Herstellung der erfindungsgemäßen Siliconschäume erfolgt vorzugsweise, indem in einem ersten Schritt der Füllstoff mit dem Alkenylgruppen enthaltenden Polyorganosiloxan (I) zu einem einheitlichen Gemisch vermischt wird. Die Einarbeitung des Füllstoffs in das Polyorganosiloxan erfolgt in einem geeigneten Mischer, z.B. einem Planetenmischer.

Die Komponenten (A) und (B) werden in einem Gewichtsverhältnis von 10:1 bis 1:0,5, bevorzugt 1:1 verwendet.

Ein weiterer Gegenstand der Erfindung ist ein Verfahren bei dem Komponenete (A) mit Komponente (B) vermischt wird.

Die Komponenten (A) und (B) haben die gleiche Bedeutung wie oben definiert. Die Komponenten werden bei Raumtemperatur (25°C) und Normaldruck innig vermischt. Die Mischung wird anschließend in 12 bis 72 h, bevorzugt 16 bis 36 h bei einer Temperatur von 15°C - 50°C, bevorzugt bei 20°C - 30°C vulkanisiert.

Ein weiterer Gegenstand der Erfindung ist ein Formkörper, der erfindungsgemäße Massen oder nach dem erfindungsgemäßen Verfahren hergestellte Massen enthält.

Die erfindungsgemäßen Schaumformteile zeichnen sich dadurch aus, daß sie gummielastische Formteile mit guten bis sehr guten mechanischen Eigenschaften sind, die sich nach dem erfindungsgemäßen Verfahren wirtschaftlich herstellen lassen. Derartige Formteile lassen sich vorzugsweise durch Dosierung über eine Misch- und Dosiervorrichtung herstellen. Derartige Formteile weisen bei Deformation eine bleibende Verformung auf, den Druckverformungsrest. Diese Verformung ist insbesondere im produktionsfrischen Zustand, wenn also nicht nachgeheizt wird, besonders hoch. Für bestimmte Anwendungen, z.B. Dichtungen im Automobil- und Maschinenbausektor, wo häufig aus technischen oder Kostengründen kein Nachheizen der Teile, also ein Tempern, erfolgt, ist es essentiell, insbesondere bei ungetemperten Teilen einen möglichst niedrigen Druckverformungsrest zu realisieren. Dieses Ziel wird durch die Erfindung erreicht. Allerdings ist auch ein Tempern erfindungsgemäß möglich.

Die zu Elastomeren vernetzenden, vulkanisierten Massen haben einen Druckverformungsrest von vorzugsweise kleiner 70, bevorzugt kleiner 50 und besonders bevorzugt kleiner 30, wobei ein Wert von 0 überhaupt keinen Druckverformungsrest bedeutet. Der Druckverformungsrest wird nach DIN 53517 gemessen.

Charakteristisch für additionsvernetzende Siliconkautschuke ist, daß im Unterschied zur Peroxidvernetzung keine Vernetzerspaltprodukte freigesetzt werden. Diese günstige Konsistenz und das Vernetzungsprinzip führen zu zahlreichen Verarbeitungsvorteilen, insbesondere bei der kostengünstigen Herstellung kleiner Formteile mit großen Stückzahlen. Wesentlich für eine automatisierte Produktion ist eine Verarbeitung ohne Nachbehandlung, z.B. ohne Nachheizen (Tempern), der Formteile.

Für eine Vielzahl von dichtungs-technischen Anwendungen, z.B. O-Ringe, Ventildeckeldichtungen, Dichtlippen, Dichtungen aller Art, Luftfilterdichtlippen etc. ist ein niedriger Druckverformungsrest von Vorteil. Aus den genannten Gründen ist der Gegenstand der Erfindung besonders interessant, da durch die beanspruchten schwefelhaltigen Additive ohne wesentliche Beeinflussung der übrigen mechanischen Eigenschaften und bzw. oder des Vernetzungsverhaltens der Druckverformungsrest deutlich verbessert wird. Des weiteren ist die niedrige Dichte für viele Anwendungen von Interesse.

Den im Stand der Technik beschriebenen Verbindungen ist gemeinsam, daß es sich nicht um Siliconschäume handelt, die organische Schwefelverbindungen enthalten. In der Literatur wird schon vor geringsten Mengen an organischen Schwefelverbindungen bei additionsvernetzenden Systemen gewarnt, da diese den Katalysator in additionsvernetzenden Systemen vergiften. So auch "Ullmann Enzyklopädie der technischen Chemie", 4. Auflage, Band 21, Seite 525, Verlag Chemie, 1982, in der geschrieben steht, daß das Vulkanisationsverhalten von Additionssystemen durch Schwefelverbindungen empfindlich gestört wird, daher ist eine Verunreinigung durch solche Verbindungen peinlichst zu vermeiden. Des weiteren wird an folgenden Stellen in Lehrbüchern auf die Katalysatorvergiftung in Additionssystemen hingewiesen (W. Hechtl, Chemie und Technologie des kalthärtenden Siliconkautschuks, in Silicone, Chemie und Technologie, S. 49ff, Vulkan Verlag, 1989; Ullmanns Encyclopedia of Ind. Chem., 5. Aufl., Vol. A5, S. 323, Verlag Chemie 1993, Weinheim; Ullmanns Encyclopedia of Ind. Chem., 5. Aufl., Vol. A 24, S. 72, Verlag Chemie 1993, Weinheim; Ullmanns Enclyklopädie der technischen Chemie, 4. Aufl., Band 21, S. 522, 525, Verlag Chemie 1982, Weinheim).

### Beispiele:

### Beispiel 1: Herstellung eines mit Organoschwefelverbindungen modifizierten Füllstoffes

Zu 100 g pyrogenen Siliciumdioxids mit einer spezifischen Oberfläche nach BET von 300 m²/g, erhältlich bei der Wacker-Chemie unter dem Namen "Wacker HDK T30", werden bei Raumtemperatur und Normaldruck unter Rühren feinstverteilt 10 g Wasser und anschließend feinstverteilt 12,24 g 3-Mercaptopropyl-trimethoxysilan, erhältlich bei der Wacker-Chemie unter dem Namen "Wacker Silan GF 70", eingemischt. Anschließend wird 1 Stunde bei 80°C getempert. Nach der Reinigung von Reaktionsnebenprodukten unter vermindertem Druck werden 106,1 g eines weißen Pulvers erhalten.

### Beispiel 2: Herstellung eines Batches zur Verbesserung des Druckverformungsrestes

In einem Kneter werden 43,3 Gew.-Teile vinylendgestopptes Polydimethylsiloxan mit einer Viskosität von 20 Pas mit 20 Gew.-Teilen eines mit Hexamethyldisilazan oberflächenmodifizierten pyrogen hergestellten Siliciumdioxids mit einer spezifischen Oberfläche von 300 m²/g nach BET gemischt und zu einer homogenen Masse verarbeitet. Zu dieser Mischung werden 10 Gew.-Teile eines modifizierten Füllstoffs nach Beispiel 1 gegeben und erneut 0,5 Stunden bei 120°C homogenisiert. Zum Abschluß werden 26,7 Gew.-Teile vinylendgestopptes Polydimethylsiloxan mit einer Viskosität von 20 Pas eingemischt.

### Beispiel 3: Herstellung eines Batches zur Verbesserung des Druckverformungsrestes

In 90 Gew.-Teile vinylendgestopptes Polydimethylsiloxan mit einer Viskosität von 20 Pas werden 10 Gew.-Teile Octadecan-1-thiol oberhalb dessen Schmelztemperatur eingerührt und zu einer homogenen Masse verarbeitet.

### Beispiel 4: Herstellung der Grundmischung eines Siliconschaumes

Herstellung der A-Komponente: In einem Planetenmischer werden 49.5 Gew.-% vinylendgestopptes Polydimethylsiloxan mit einer Viskosität von 20 Pas und 25 Gew.% vinylendgestopptes Polydimethylsiloxan mit einer Viskosität von 1 Pas mit 14 Gew.-% oberflächenmodifizierten pyrogen hergestellten Siliciumdioxid mit einer spezifischen Oberfläche von 140 m²/g nach BET homogen gemischt. Dazu werden 10 Gew.% eines hydroxylendgestopperten Polydimethylsiloxans sowie 0.7 Gew.% eines Platinkatalysators, bestehend aus 97 Gew.-% eines Polydimethylsiloxans und 3 Gew.-% eines Platin-divinyl-tetramethyldisiloxan-Komplexes, und 0,8 Gew.-% eines Vinylpolydimethylsiloxans als Inhibitor zugemischt und homogenisiert.

Herstellung der B-Komponente: In einem Planetenmischer werden 33 Gew.-% vinylendgestopptes Polydimethylsiloxan mit einer Viskosität von 20 Pas und 30 Gew.% vinylendgestopptes Polydimethylsiloxan mit einer Viskosität von 1 Pas mit 12 Gew.-Teilen oberflächenmodifiziertes pyrogen hergestelltes Siliciumdioxid mit einer spezifischen Oberfläche von 140 m²/g nach BET homogen gemischt. Dazu werden 15 Gew.-Teilen eines hydroxylendgestopperten Polydimethylsiloxans sowie 10 Gew.% eines Polydimethylsiloxan-co-hydrogenmethylmethylpolysiloxans und 0.7 Gew.% eines Vinylpolydimethylsiloxans als Inhibitor zugemischt und homogenisiert.

Die erhaltenen Schaumkomponenten A und B werden im Verhältnis 1:1 gemischt und bei Raumtemperatur vulkanisiert. Man kann bei 100°C während einer Stunde nachtempern.

### Beispiel 5:

A-Komponente wie in Beispiel 4. B-Komponente wie in Beispiel 4, aber mit 31 Gew.% des vinylendgestopptes Polydimethylsiloxan mit einer Viskosität von 20 Pas und 2 Gew.% des Batches nach Beispiel 2.

### Beispiel 6:

A-Komponente wie in Beispiel 4. B-Komponente wie in Beispiel 4, aber mit 26 Gew.% des vinylendgestopptes Polydimethylsiloxan mit einer Viskosität von 20 Pas und 7 Gew.% des Batches nach Beispiel 2.

### Beispiel 7:

A-Komponente wie in Beispiel 4. B-Komponente wie in Beispiel 4, aber mit 25 Gew.% des vinylendgestopptes Polydimethylsiloxan mit einer Viskosität von 20 Pas und 8 Gew.% des Batches nach Beispiel 2.

### Beipiel 8:

A-Komponente wie in Beispiel 4. B-Komponente wie in Beispiel 4, aber mit 12 Gew.% des vinylendgestopptes Polydimethylsiloxan mit einer Viskosität von 20 Pas und 21 Gew.% des Batches nach Beispiel 2.

**Verbesserung des Druckverformungsrestes bei siliconschäumen:**

| | Beispiel 4 | Beispiel 7 |
|---|---|---|
| Shore-Härte A mit Haut | 9-11 | 9-11 |
| Shore 00 mit Haut | 50-55 | 50-55 |
| Reißfestigkeit [kPa] | 350 | 350 |
| Reißdehnung [%] | 100 | 120 |
| Druckverformungsrest 24 h/100°C [%] | 43 | 24 |
| Schaumdichte [g/ml] | 0,29-0,35 | 0,29-0,35 |
| Vulkanisations-zeit t [h] bei 25°C | 24 | 24 |
| | | |

| Druckverformungsrest [%] | Bsp.4 | Bsp.5 | Bsp.6 | Bsp.7 | Bsp.8 |
|---|---|---|---|---|---|
| 24 h/100°C | 42 | 30 | 25 | 24 | 21 |
| 24 h/150°C | 80 | 67 | 59 | 51 | 48 |
| **DIN-Vorschriften:** | | | | | |
| DIN | | | | | |
| DIN 53505, ISO 868 - Shore-Härte A, Shore 00 | | | | | |
| DIN 53571 - Reißfestigkeit, Reißdehnung | | | | | |
| DIN 53517 - Druckverformungsrest | | | | | |
| DIN 53420 - Dichte | | | | | |

## Patentansprüche

1. Zu Elastomeren vernetzende Massen auf der Basis von
Komponente (A), enthaltend Polyorganosiloxan (I) mit mindestens zwei Alkenylgruppen pro Molekül, zumindest eine Hydroxylgruppe enthaltende Verbindung und einen metallischen Katalysator (V), mit der Maßgabe, daß die Hydroxylgruppen enthaltende Verbindung nicht Ethinylcyclohexanol ist
und
Komponente (B), enthaltend Polyorganosiloxan (II) mit mindestens zwei siliciumgebundenen Wasserstoffatomen und organische Schwefelverbindung (VI).

2. Zu Elastomeren vernetzende Massen nach Anspruch 1, dadurch gekennzeichnet, daß die zumindest eine Hydroxylgruppe enthaltende Verbindung ein Polyorganosiloxan (III) mit mindestens zwei Hydroxylgruppen pro Molekül ist.

3. Zu Elastomeren vernetzende Massen nach Anspruch 1, dadurch gekennzeichnet, daß die zumindest Hydroxylgruppe enthaltende Verbindung ein einwertiger oder mehrwertiger Alkohol, Wasser, Silanol oder andere Hydroxylgruppen enthaltende Verbindungen (IV) sind.

4. Zu Elastomeren vernetzende Massen nach Anspruch 1, dadurch gekennzeichnet, daß die zumindest eine Hydroxylgruppe enthaltende Verbindung eine Mischung aus einem Polyorganosiloxan (III) mit mindestens zwei Hydroxylgruppen pro Molekül ist und einem einwertigen und/oder mehrwertigen Alkohol und/oder Wasser und/oder Silanol und/oder andere Hydroxylgruppen enthaltender Verbindungen (IV) ist.

5. Zu Elastomeren vernetzende Massen nach Anspruch 1, dadurch gekennzeichnet, daß Komponente (B) noch zusätzlich Polyorganosiloxan (I) und (III) enthält.

6. Zu Elastomeren vernetzende Massen nach einem oder mehreren der Ansprüche 1 bis 5, dadurch gekennzeichnet, daß die organische Schwefelverbindung auf einen anorganischen Füllstoff aufgebracht ist.

7. Zu Elastomeren vernetzende Massen nach Anspruch 1 oder 6, dadurch gekennzeichnet, daß die organische Schwefelverbindung 3-Mercaptopropyl-trimethoxysilan, 3-Mercaptopropyl-triethoxysilan, Polydimethylsiloxan-co-mercaptoalkylverbindung und/oder Octadecan-1-thiol ist.

8. Zu Elastomeren vernetzende Massen nach einem oder mehreren der Ansprüche 1, 6 oder 7, dadurch gekennzeichnet, daß die organische Schwefelverbindung in Mengen von 0,0001 - 2 Gew.% bezogen auf das Gesamtgewicht der Masse enthalten ist.

9. Verfahren zur Herstellung von Massen nach einem oder mehreren der Ansprüche 1 bis 8, dadurch gekennzeichnet, daß Komponente (A) mit Komponente (B) vermischt wird.

10. Formkörper enthaltend Massen nach einem oder mehreren der Ansprüche 1 bis 8 oder hergestellt nach Anspruch 9, dadurch gekennzeichnet, daß der Formkörper ungetempert ist.

11. Zu Elastomeren vernetzende Massen nach einem oder mehreren der Ansprüche 1 bis 8, oder hergestellt nach Anspruch 9, dadurch gekennzeichnet, daß die vulkanisierten, ungetemperten Massen einen niedrigen Druckverformungsrest haben.

## Claims

1. Compositions which crosslink to give elastomers and are based on
component (A) comprising polyorganosiloxane (I) having at least two alkenyl groups per molecule, at least one hydroxyl-group-containing compound and a metallic catalyst (V), with the proviso that the hydroxyl-group-containing compound is not ethynyl-cyclohexanol
and
component (B) comprising polyorganosiloxane (II) having at least two silicon-bonded hydrogen atoms and organic sulphur compound (VI).

2. Compositions which crosslink to give elastomers, according to Claim 1, characterized in that the compound containing at least one hydroxyl group is a polyorganosiloxane (III) having at least two hydroxyl groups per molecule.

3. Compositions which crosslink to give elastomers, according to Claim 1, characterized in that the compound containing at least one hydroxyl group are [sic] a monohydric or polyhydric alcohol, water, a silanol, or other compounds (IV) containing hydroxyl groups.

4. Compositions which crosslink to give elastomers, according to Claim 1, characterized in that the compound containing at least one hydroxyl group is a mixture of a polyorganosiloxane (III) having at least two hydroxyl groups per molecule with a monohydric and/or polyhydric alcohol and/or water and/or a silanol and/or other compounds (IV) containing hydroxyl groups.

5. Compositions which crosslink to give elastomers, according to Claim 1, characterized in that component (B) also comprises polyorganosiloxanes (I) and (III).

6. Compositions which crosslink to give elastomers, according to one or more of Claims 1 to 5, characterized in that the organic sulphur compound has been applied to an inorganic filler.

7. Compositions which crosslink to give elastomers, according to Claim 1 or 6, characterized in that the organic sulphur compound is 3-mercapto-propyltrimethoxysilane, 3-mercaptopropyltriethoxy-silane, a polydimethylsiloxane-co-mercaptoalkyl compound and/or octadecane-1-thiol.

8. Compositions which crosslink to give elastomers, according to one or more of Claims 1, 6 or 7, characterized in that the organic sulphur compound is present in amounts of from 0.0001 to 2% by weight, based on the total weight of the composition.

9. Process for preparing compositions according to one or more of Claims 1 to 8, characterized in that component (A) is mixed with component (B).

10. Moulding comprising compositions according to one or more of Claims 1 to 8 or produced according to Claim 9, characterized in that the moulding has not been annealed.

11. Compositions which crosslink to give elastomers, according to one or more of Claims 1 to 8, or prepared according to Claim 9, characterized in that the vulcanized, unannealed composition has low compression set.

## Revendications

1. Compositions réticulant en élastomères, à base
d'un composant (A) comprenant un polyorganosiloxane (I) ayant au moins deux groupes alcényle par molécule, un composé renfermant au moins un groupe hydroxy et un catalyseur métallique (V), à condition que le composé renfermant des groupes hydroxy ne soit pas l'éthynylcyclohexanol, et
d'un composant (B) comprenant un polyorganosiloxane (II) ayant au moins deux atomes d'hydrogène liés au silicium et un composé soufré organique (VI).

2. Compositions réticulant en élastomères selon la revendication 1, caractérisées en ce que le composé renfermant au moins un groupe hydroxy est un polyorganosiloxane (III) ayant au moins deux groupes hydroxy par molécule.

3. Compositions réticulant en élastomères selon la revendication 1, caractérisées en ce que le composé renfermant au moins un groupe hydroxy est un alcool monohydrique ou polyhydrique, l'eau, un silanol ou d'autres composés renfermant des groupes hydroxy (IV).

4. Compositions réticulant en élastomères selon la revendication 1, caractérisées en ce que le composé renfermant au moins un groupe hydroxy est un mélange d'un polyorganosiloxane (III) ayant au moins deux groupes hydroxy par molécule et d'un alcool monohydrique et/ou polyhydrique et/ou d'eau et/ou d'un silanol et/ou d'autres composés renfermant des groupes hydroxy (IV).

5. Compositions réticulant en élastomères selon la revendication 1, caractérisées en ce que le composant (B) comprend en outre également un polyorganosiloxane (I) et un polyorganosiloxane (III).

6. Compositions réticulant en élastomères selon l'une ou plusieurs des revendications 1 à 5, caractérisées en ce que le composé soufré organique est appliqué sur une charge inorganique.

7. Compositions réticulant en élastomères selon la revendication 1 ou 6, caractérisées en ce que le composé soufré organique est le 3-mercaptopropyltriméthoxysilane, le 3-mercaptopropyltriéthoxysilane, un composé polydiméthylsiloxane-co-mercaptoalkyle et/ou l'octadécane-1-thiol.

8. Compositions réticulant en élastomères selon l'une ou plusieurs des revendications 1, 6 ou 7, caractérisées en ce que le composé soufré organique est présent en quantités de 0,0001 à 2% en poids, par rapport au poids total de la composition.

9. Procédé de préparation de compositions selon l'une ou plusieurs des revendications 1 à 8, caractérisé en ce que le composant (A) est mélangé avec le composant (B).

10. Pièce moulée comprenant des compositions selon l'une ou plusieurs des revendications 1 à 8 ou préparées selon la revendication 9, caractérisée en ce que la pièce moulée est non recuite.

11. Compositions réticulant en élastomères selon l'une ou plusieurs des revendications 1 à 8, ou préparées selon la revendication 9, caractérisées en ce que les compositions vulcanisées non recuites présentent une faible déformation permanente par compression.
